# EUROPEAN PATENT APPLICATION

(11) **EP 1 480 196 A2**
(43) Date of publication of application: **24.11.2004**
(21) Application number: 04252901.6
(22) Date of filing: 19.05.2004
(51) Int. Cl.: G09G 5/00

(54) **Apparatus and method for moving image conversion, apparatus and method for moving image transmission, and programs therefor**

(30) Priority: 19.05.2003 JP 2003140246; 29.05.2003 JP 2003152708
(71) Applicant: FUJI PHOTO FILM CO., LTD., Kanagawa-ken, 250-01 (JP)
(72) Inventor: Nonaka, Shunichiro, c/o Fuji Photo Film Co. Ltd., Asaka-shi Saitama-ken (JP)
(74) Representative: Stevens, Jason Paul

(57) **Abstract**

A continuous frame-by-frame image display as a reduced-color moving image can be carried out in high quality on a high-resolution display device of a mobile terminal or the like. A request reception unit receives a moving image transfer request from the terminal, and a model judgment unit judges the model of the terminal. A moving image format conversion unit converts moving image data into a format corresponding to the model. If the terminal cannot carry out moving image display but can display a multimedia image wherein frames are continuously displayed one by one in high quality, a moving image conversion unit converts the moving image data into multimedia image data. At this time, a data size limit and the like of the terminal are considered. An image transmission unit sends the multimedia image data to the terminal.

## Description

### BACKGROUND OF THE INVENTION

### Field of the Invention

The present invention relates to a moving image conversion apparatus and a moving image conversion method for converting a moving image into a multimedia image such as a Flash™ movie or the like, and to a moving image conversion apparatus and a moving image conversion method for converting a moving image into a reduced-color moving image. The present invention also relates to a moving image transmission apparatus and a moving image transmission method for sending a moving image to a mobile terminal or the like, and to programs that cause a computer to execute the moving image conversion methods and the moving image transmission method.

### Description of the Related Art

An image obtained by a digital camera, a scanner, or the like can represent 24-bit colors (that is, approximately 16.77 million colors) wherein 8 bits each are assigned to R, G, and B. However, some reproduction apparatus are capable of reproducing fewer colors such as 256 colors. Furthermore, an image format used frequently in Web sites (such as GIF or PNG) can deal with only 256 colors. Therefore, for displaying an image obtained by a digital camera or the like on a reproduction apparatus which can display fewer colors, or for converting the image into an image format such as GIF or PNG, the 16.77 million colors need to be reduced to 256 colors.

In conventional color reduction processing, palette data comprising 256 palette colors are generated for optimally representing the image to be displayed, and one of the 256 palette colors is selected from the palette data for color conversion on each pixel. In this manner, the colors in the image are reduced to the 256 colors.

Moreover, a method of generating a moving image has been proposed in Japanese Unexamined Patent Publication No. 11(1999)-259640. In this method, a moving image obtained by a digital camcorder is subjected to real-time color reduction processing and an image having motion (hereinafter referred to as a reduced-color moving image) is generated by serially changing still images. In this method, frames that change at every 1/60 of a second in the moving image are subjected to the real-time color reduction processing without being skipped. Therefore, palette data are generated for every several frames instead of each frame, and the color reduction processing is carried out by using the palette data for the several frames.

Meanwhile, functions of mobile terminals such as camera-embedded mobile phones have improved remarkably, and a communication speed is also rising. Therefore, a mobile terminal has been realized that is capable of photographing a moving image, transmitting the moving image by attaching the image to an email, and reproducing desired moving image content by downloading the moving image content through access to a moving image transmission server.

In addition, an email relay server has also been proposed that can carry out appropriate image processing in accordance with the type of a camera-embedded mobile terminal as a receiver of an email attached with a still image (Japanese Patent Application No. 2002-214215). By using such a relay server, the image processing can be carried out on image data to generate an image that is appropriate for a size, brightness, and colors of a display device of the mobile terminal, and the image data attached to the email are sent to the terminal.

Following a recent increase in the number of pixels in a display device of a mobile terminal, a mobile terminal having a display that is 2X2 (in other words, 4) times larger in the number of pixels in horizontal and vertical directions is on the market. If an image appropriate for the number of pixels in such a display device of a mobile terminal is used, the image can be displayed in much higher definition.

However, regardless of an increase in the number of pixels in a display device, capacity of a memory installed in a mobile terminal for image display is not large due to high cost or the like. For example, although the number of pixels in a display device has achieved a fourfold increase, memory capacity has only been doubled.

Meanwhile, a format of a reduced-color moving image such as GIF and PNG uses a compression method considering one-dimensional redundancy (that is, redundancy in only one direction of an image). Therefore, although a compression ratio can be improved in the case where pixels having the same value are aligned in one direction, the compression ratio cannot be increased for a direction orthogonal thereto.

For this reason, in the case where a reduced-color moving image of a reduced-color moving image format is displayed on a display device of a mobile terminal having a large number of pixels (hereinafter referred to as a high-resolution display device), a data size of the image after compression can only be doubled although the number of pixels therein can be quadrupled, for example. Therefore, the data size of the reduced-color moving image needs to be decreased by degrading image quality, decreasing frames in the image to be displayed, or lowering resolution, for example. However, since the image data of the reduced-color moving image format originally have only 256 displayable colors, quality of the image displayed on the mobile terminal is substantially degraded by the data size reduction despite that the mobile terminal can carry out high definition image display.

Furthermore, in the case where moving image content is sent to a mobile terminal, the moving image content can surely be displayed thereon if the terminal is capable of moving image display. However, there are some models of mobile terminals that cannot display a moving image. Therefore, even if a moving image having been subjected to appropriate image processing is sent to a mobile terminal, the moving image can or cannot be displayed thereon, depending on the model thereof.

In addition, in the method described in Japanese Unexamined Patent Publication No. 11(1999)-259640, since the palette data are generated for every several frames, a processing speed is low unless a high-performance processing device is used. As a result, a size of the device becomes large.

### SUMMARY OF THE INVENTION

The present invention has been conceived based on consideration of the above circumstances. An object of the present invention is therefore to enable high-quality image display wherein frames are continuously displayed one by one as in a reduced-color moving image on a display device of a mobile terminal having a high-resolution display screen.

Another object of the present invention is to enable pseudo moving image display on a display device that cannot display a moving image.

Still another object of the present invention is to enable acquisition of a reduced-color moving image from a moving image without increasing a size of an apparatus therefor.

A first moving image conversion apparatus of the present invention comprises:
sampling means for sampling frames from a moving image; and
multimedia image generation means for generating a multimedia image in a multimedia format by compressing the frames according to a compression method considering two-dimensional redundancy.

The multimedia image in the multimedia format refers to an image in a format that enables interactive serial display of the frames while causing the frames to synchronize with sound. For example, Flash™ developed by Macromedia, Inc. can be used for generating the multimedia image, which is not necessarily limited thereto. An image in a format that does not cause the image to synchronize with sound is included in the multimedia image of the multimedia format.

A Flash™ movie is a vector graphic animation to be displayed on the Web, and combines sound and animation of vector graphics. A file format called SWF is used in a Flash™ movie, and a Flash™ movie realizes interactive display of a graphic animation such as figures, photographs, and the like represented by vectors on a display screen in synchronization with sound. By using Flash™, the multimedia image wherein the frames are continuously reproduced one by one can be generated.

A Flash™ movie can deal with a reduced-color moving image in a format such as GIF or PNG. However, in the present invention, the frames are compressed in a method such as JPEG that considers redundancy in two dimensions, rather than a method such as GIF or PNG that considers redundancy in only one dimension.

In the first moving image conversion apparatus of the present invention, the multimedia image generation means may generate the multimedia image in such a manner that it can be displayed on a display device in accordance with a characteristic of the display device.

The characteristic of the display device refers to resolution of the display device, a data size that can be dealt with by the display device, and the number of colors that can be reproduced by the display device, for example.

Generating the multimedia image in such a manner that it can be displayed on the display device refers to generating the multimedia image in such a manner that the image can be displayed on the display device without any processing by the display device. More specifically, the number of the frames in the multimedia image, a display interval between the frames, a size of display, the number of colors to be displayed, a data size of the multimedia image, and a data size after decompression need to agree with the characteristic of the display device so that no processing is necessary by the display device.

The multimedia image generation means may comprise:
size change means for enlarging or reducing the frames according to the characteristic of the display device;
frame compression means for compressing the frames by the compression method considering two-dimensional redundancy so that a data size of the multimedia image can be dealt with by the display device; and
format compilation means for generating the multimedia image by compiling the frames compressed by the frame compression means into the multimedia format.

In the case where the multimedia image does not have the data size that can be dealt with by the display device, the frame compression means may repeat changing of a compression ratio of the frames and/or thinning of the frames until the data size of the multimedia image becomes the data size that can be dealt with by the display device.

In the first moving image conversion apparatus of the present invention, the display device may be a mobile terminal.

A first moving image transmission apparatus of the present invention is a moving image transmission apparatus that sends a moving image to a terminal requesting transfer of the moving image, and the first moving image transmission apparatus comprises:
model judgment means for judging a model of the terminal; and
moving image conversion means for converting the moving image into a multimedia image in a multimedia format in the case where the model of the terminal is not capable of moving image display but enables multimedia image display. The first moving image transmission apparatus then sends the multimedia image instead of the moving image to the terminal.

In the case where the model of the terminal can carry out neither moving image display nor multimedia image display but enables reduced-color moving image display, the first moving image transmission apparatus of the present invention may comprise reduced-color moving image conversion means for converting the moving image into a reduced-color moving image. The first moving image transmission apparatus then sends the reduced-color moving image instead of the moving image to the terminal.

In the first moving image transmission apparatus of the present invention, the moving image conversion means may be the first moving image conversion apparatus of the present invention.

A first moving image conversion method of the present invention comprises the steps of:
sampling frames from a moving image; and
generating a multimedia image in a multimedia format by compressing the frames according to a compression method that considers two-dimensional redundancy.

A first moving image transmission method of the present invention is a method of sending a moving image to a terminal requesting transfer of the moving image. The first moving image transmission method comprises the steps of:
judging a model of the terminal;
converting the moving image into a multimedia image in a multimedia format in the case where the model of the terminal is not capable of moving image display but enables multimedia image display; and
sending the multimedia image instead of the moving image to the terminal.

The first moving image conversion method and the first moving image transmission method of the present invention may be provided as programs executed by a computer.

According to the first moving image conversion apparatus and the first moving image conversion method of the present invention, the frames are sampled from the moving image and compressed according to the compression method that considers two-dimensional redundancy. In this manner, the multimedia image in the multimedia format is generated. At this time, the frames sampled from the moving image are included in the multimedia image by being compressed in the compression method such as JPEG that considers two-dimensional redundancy instead of a compression method such as GIF or PNG considering one-dimensional redundancy as used for generating a reduced-color moving image. The compression method considering two-dimensional redundancy can reduce the data size than the compression method considering one-dimensional redundancy while an image quality is maintained. Therefore, according to the present invention, the image to be displayed continuously frame by frame can be generated in high quality while the data size thereof can be made smaller than that of a reduced-color moving image. In this manner, the image can be displayed in high quality on the display device such as a mobile terminal that has a high-resolution screen.

In addition, by generating the multimedia image that is displayable on the display device according to the characteristic of the display device, the multimedia image can be displayed on the display device without fail.

The frames can be enlarged or reduced according to the characteristic. The frames are then compressed according to the compression method considering two-dimensional redundancy so that the data size thereof can be dealt with by the display device, and complied to generate the multimedia image. In this manner, the multimedia image can be generated in consideration of the screen size and the data size that can be dealt with by the display device. Therefore, the multimedia image can be displayed on the display device with more certainty.

The data size of the frames after the compression becomes different, depending on the fact that the frames represent simple images of a single color or complex images including detailed subjects, for example. The data size of the frames also becomes different after decompression, depending on the simplicity or complexity of the images. Therefore, the data size of the multimedia image (before and after decompression) may not become the data size that can be dealt with by the display device in some cases, depending on how complex the frames are. In this case, by repeating procedure of the compression ratio change and/or the frame thinning until the data size can be dealt with by the display device, the multimedia image having the data size that can be dealt with by the display device can be generated.

By using a mobile terminal as the display device, the multimedia image can be displayed on the mobile terminal.

According to the first moving image transmission apparatus and the first moving image transmission method of the present invention, the model of the terminal requesting transfer of the moving image is judged first, and the multimedia image is generated from the moving image in the case where the model does not allow display of the moving image but can deal with the multimedia image in the multimedia format considering two-dimensional redundancy. The multimedia image is then sent to the terminal instead of the moving image. Therefore, even if the mobile terminal cannot display the moving image, the multimedia image enables pseudo moving image display.

In the case where the terminal requesting transfer of the moving image can display neither the moving image nor the multimedia image but enables reduced-color moving image display, the moving image is converted into the reduced-color moving image, and sent to the terminal instead of the moving image. Therefore, even if the terminal can display neither the moving image nor the multimedia image, pseudo moving image display can be realized by using the reduced-color moving image.

In the first moving image transmission apparatus and in the first moving image transmission method of the present invention, by obtaining the multimedia image from the moving image in the same manner as the first moving image conversion apparatus and the first moving image conversion method of the present invention, the image displayed continuously frame by frame can be obtained in high quality while the data size thereof can be suppressed if compared to a reduced-color moving image. In this manner, the image can be displayed in high quality on the display device of a mobile terminal or the like having a high-resolution screen.

A second moving image conversion apparatus of the present invention is a moving image conversion apparatus for converting a moving image comprising frames into a reduced-color moving image having a predetermined number of colors. The second moving image conversion apparatus comprises:
reference frame generation means for generating a reference frame that represents the frames;
palette data generation means for generating a palette data set including the predetermined number of colors from the reference frame;
frame sampling means for sampling, from the frames, reduced-color moving image generation frames to be used for generating the reduced-color moving image;
color reduction processing means for converting the reduced-color moving image generation frames into reduced-color moving image frames by using the palette data set; and
frame compilation means for compiling the reduced-color moving image from the reduced-color moving image frames.

In the second moving image conversion apparatus of the present invention, the reference frame generation means may generate the reference frame from all or a part of the frames comprising the moving image.

As the part of the frames, the reduced-color moving image generation frames may be used.

A second moving image transmission apparatus of the present invention is an apparatus for sending a moving image to a terminal requesting transfer of the moving image, and the second moving image transmission apparatus comprises:
model judgment means for judging a model of the terminal; and
reduced-color moving image conversion means for converting the moving image into a reduced-color moving image in the case where the model is incapable of moving image display but capable of reduced-color moving image display. The second moving image transmission apparatus then sends the reduced-color moving image instead of the moving image to the terminal.

In the second moving image transmission apparatus of the present invention, the reduced-color moving image conversion means may further comprise:
reference frame generation means for generating a reference frame that represents frames comprising the moving image;
palette data generation means for generating a palette data set including a predetermined number of colors from the reference frame;
frame sampling means for sampling, from the frames, reduced-color moving image generation frames to be used for generating the reduced-color moving image;
color reduction processing means for converting the reduced-color moving image generation frames into reduced-color moving image frames according to the palette data set; and
frame compilation means for compiling the reduced-color moving image from the reduced-color moving image frames.

A second moving image conversion method of the present invention is a method of converting a moving image comprising frames into a reduced-color moving image having a predetermined number of colors, and the second moving image conversion method comprises the steps of:
generating a reference frame that represents the frames;
generating a palette data set including the predetermined number of colors from the reference frame;
sampling, from the frames, reduced-color moving image generation frames to be used for generating the reduced-color moving image;
converting the reduced-color moving image generation frames into reduced-color moving image frames according to the palette data set; and
compiling the reduced-color moving image from the reduced-color moving image frames.

A second moving image transmission method of the present invention is a method of sending a moving image to a terminal requesting transfer of the moving image, and the second moving image transmission method comprises the steps of:
judging a model of the terminal;
converting the moving image into a reduced-color moving image in the case where the model is not capable of moving image display but is capable of reduced-color moving image display; and
sending the reduced-color moving image instead of the moving image to the terminal.

The second moving image conversion method and the second moving image transmission method of the present invention may be provided as programs executed by a computer.

According to the second moving image conversion apparatus and the second moving image conversion method of the present invention, the reference frame representing the frames comprising the original moving image is generated, and the palette data set including the predetermined number of colors is generated from the reference frame. The reduced-color moving image generation frames are then sampled from the frames, and converted into the reduced-color moving image frames by using the palette data set. The reduced-color moving image frames are compiled into the reduced-color moving image. Therefore, in the second moving image conversion apparatus and the second moving image conversion method of the present invention, the palette data set does not need to be generated for every several frames as in the case of the method described in Japanese Unexamined Patent Publication No. 11 (1999)-259640. The only palette data set is generated and used for obtaining the reduced-color moving image from the moving image. Consequently, the reduced-color moving image can be generated without increasing a size of the apparatus.

By generating the reference frame from all or a part of the frames comprising the original moving image, the palette data set can be generated for reflecting colors of all or the part of the frames. Therefore, the reduced-color moving image can be generated without a substantial change of the colors in the original moving image.

According to the second moving image transmission apparatus and the second moving image transmission method of the present invention, the model of the terminal requesting transfer of the moving image is judged first, and the moving image is converted into the reduced-color moving image and sent to the terminal instead of the moving image in the case where the model does not allow display of the moving image but can deal with the reduced-color moving image. Therefore, even if the terminal cannot display the moving image, pseudo moving image display can be realized based on the reduced-color moving image.

In the second moving image transmission apparatus and the second moving image transmission method of the present invention, the reduced-color moving image can be obtained from the moving image, in the same manner as the second moving image conversion apparatus and the second moving image transmission method of the present invention without a size increase in the apparatus.

### BRIEF DESCRIPTION OF THE DRAWINGS

Figure 1 is a block diagram showing a configuration of a moving image transmission system using a moving image transmission server adopting a moving image conversion apparatus and a moving image transmission apparatus of a first embodiment of the present invention;
Figure 2 is a table showing a relationship between models and formats;
Figure 3 is a block diagram showing a configuration of a moving image conversion unit in detail;
Figure 4 is a block diagram showing a configuration of a multimedia image generation unit in detail;
Figure 5 is a block diagram showing a configuration of a reduced-color moving image generation unit in detail;
Figure 6 is a flow chart showing a procedure carried out in the first embodiment;
Figure 7 is a flow chart showing a procedure in multimedia image generation processing;
Figure 8 is a flow chart showing a procedure in reduced-color moving image generation processing;
Figure 9 is a block diagram showing a configuration of a moving image conversion apparatus;
Figure 10 is a block diagram showing a configuration of a moving image transmission system using a moving image transmission server adopting a moving image conversion apparatus and a moving image transmission apparatus of a second embodiment of the present invention;
Figure 11 is a block diagram showing a configuration of a reduced-color processing unit in detail;
Figure 12 is a flow chart showing a procedure carried out in the second embodiment; and
Figure 13 is a flow chart showing a procedure in color reduction processing.

### DESCRIPTION OF THE PREFERRED EMBODIMENTS

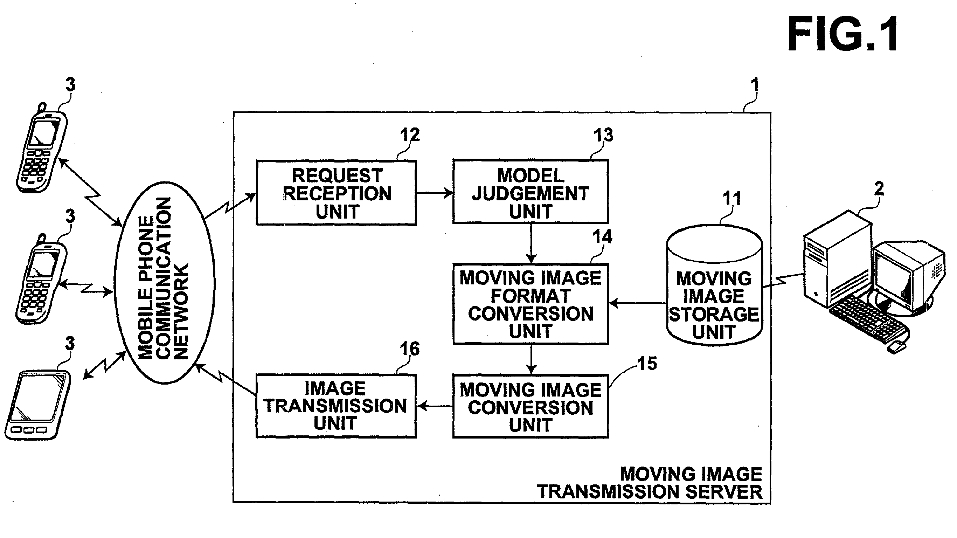

Hereinafter, embodiments of the present invention will be explained with reference to the accompanying drawings. Figure 1 is a block diagram showing a configuration of a moving image transmission system using a moving image transmission server adopting a moving image conversion apparatus and a moving image transmission apparatus of a first embodiment of the present invention. As shown in Figure 1, the moving image transmission system in the first embodiment comprises a moving image transmission server 1 that stores moving image data sets M0 generated by a personal computer 2 or the like as a moving image content generation apparatus. When a mobile terminal 3 such as a mobile phone, a PHS, or a PDA requests transfer of any one of the moving image data sets from the server 1 via a mobile phone communication network, the requested moving image data set M0 is sent from the moving image transmission server 1 to the terminal 3.

The moving image transmission server 1 comprises a moving image storage unit 11, a request reception unit 12, a model judgment unit 13, a moving image format conversion unit 14, a moving image conversion unit 15, and an image transmission unit 16.

The moving image storage unit 11 stores the moving image data sets M0 generated by the personal computer 2. The moving image data M0 are encoded according to a predetermined compression method, and stored in the moving image storage unit 11.

The request reception unit 12 receives the moving image transfer request sent from the terminal 3. The request sent from the terminal 3 includes the file name of the requested moving image data set M0 and model information representing the model of the terminal 3.

The model judgment unit 13 judges the model of the terminal 3, based on the model information included in the request.

The moving image format conversion unit 14 reads out the moving image data set M0 having the file name included in the request, from the moving image storage unit 11. The moving image format conversion unit 14 further decodes the moving image data set M0, and converts the format of the moving image data set M0 according to the model of the terminal 3 judged by the model judgment unit 13.

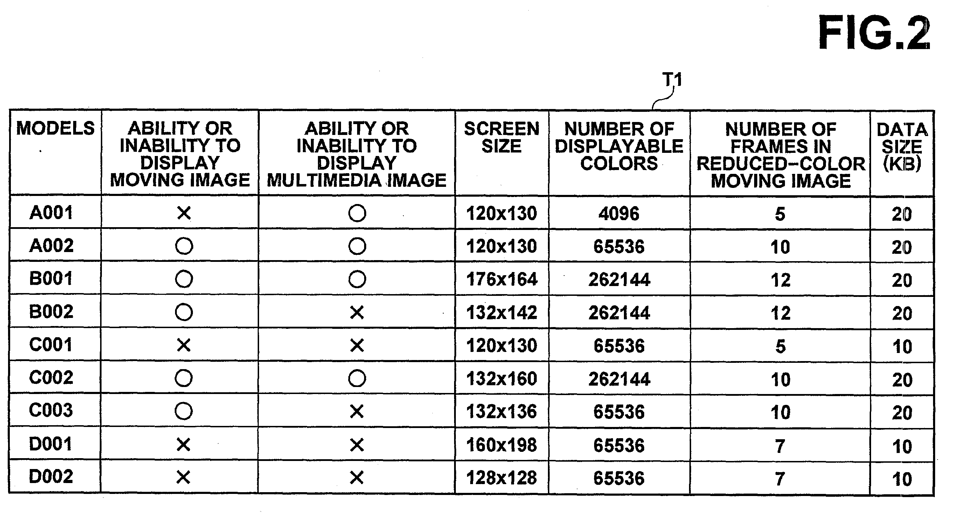

Figure 2 is a table representing a relationship between formats and models. In the case where the terminal 3 is a mobile phone, a table T1 in Figure 2 shows ability or inability to carry out moving image display and multimedia image display, a screen size, the number of colors displayable thereon, the number of frames displayable in a reduced-color moving image, and a data size that can be dealt with (in KB) , regarding each of the models (such as A001, A002, and B001) . The moving image format conversion unit 14 converts the format of the moving image data set M0 so that the data become suitable for the screen size and the number of displayable colors on the terminal 3, with reference to the table T1. In this manner, the moving image format conversion unit 14 obtains a format-converted moving image data set M1 by the format conversion. The format-converted moving image data set M1 is encoded.

In the case where the terminal 3 cannot display the moving image represented by the format-converted moving image data set M1, the moving image conversion unit 15 then judges whether or not the terminal 3 can carry out multimedia image display. If a result of the judgment is affirmative, the moving image conversion unit 15 converts the format-converted moving image data set M1 into a multimedia image data set F1. In the case where the terminal 3 can carry out neither moving image display nor multimedia image display, the moving image conversion unit 15 converts the format-converted moving image data set M1 into a reduced-color moving image data set R1.

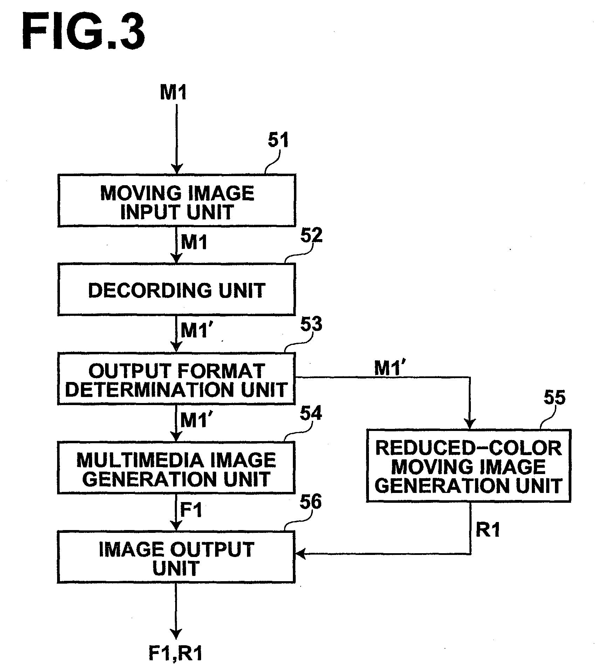

Figure 3 is a block diagram showing a configuration of the moving image conversion unit 15 in detail. As shown in Figure 3, the moving image conversion unit 15 comprises a moving image input unit 51, a decoding unit 52, an output format determination unit 53, a multimedia image generation unit 54, a reduced-color moving image generation unit 55, and an image output unit 56.

The moving image input unit 51 receives an input of the format-converted moving image data set M1 thereto.

The decoding unit 52 decodes the format-converted moving image data set M1 and generates a raw moving image data set M1'.

By referring to the table T1, the output format determination unit 53 inputs the raw moving image data set M1' to the multimedia image generation unit 54 in the case where the terminal 3 can display the multimedia image represented by the multimedia image data set F1. Otherwise, the output format determination unit 53 inputs the raw moving image data set M1' to the reduced-color moving image generation unit 55.

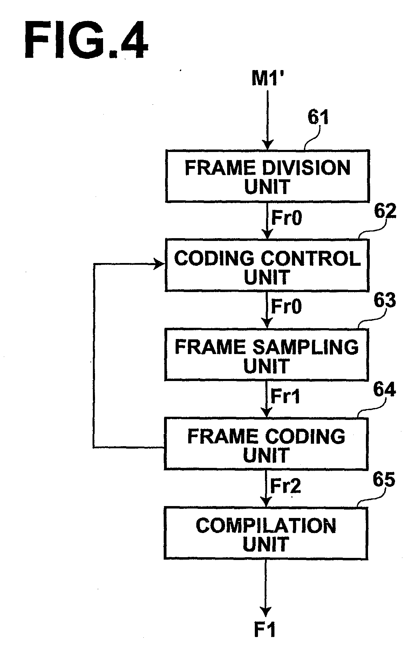

The multimedia image generation unit 54 generates the multimedia image data set F1 from the raw moving image data set M1'. Figure 4 is a block diagram showing a configuration of the multimedia image generation unit 54 in detail. As shown in Figure 4, the multimedia image generation unit 54 comprises a frame division unit 61, a coding control unit 62, a frame sampling unit 63, a frame coding unit 64, and a compilation unit 65.

The frame division unit 61 divides the raw moving image data set M1' into image data sets of respective frames (hereinafter referred to as frame data sets Fr0). In this embodiment, 1 frame represents a part of the moving image displayed for 1/60 of a second, for example.

The coding control unit 62 controls the frame sampling unit 63 and the frame coding unit 64 so that the data size of the multimedia image data set F1 can be equal to or smaller than a data size that can be dealt with by the terminal 3 requesting the transfer (hereinafter referred to as a data size K). The data size K refers to both a data size K1 at the time of dealing with image data in compression and a data size K2 at the time of dealing with image data after decompression.

The frame sampling unit 63 samples frame data sets Fr1 from the frame data sets Fr0 to cause the data size of the multimedia image data set F1 to become the data size K or smaller.

The frame coding unit 64 compresses the sampled frame data sets Fr1 according to a JPEG format that considers two-dimensional redundancy so that the data size of the multimedia image data set F1 becomes the data size K or smaller. The frame coding unit 64 obtains compressed frame data sets Fr2 in this manner. The frame coding unit 64 further judges whether the data size of the multimedia image data set F1 generated through compilation of the compressed frame data sets Fr2 by the compilation unit 65 is equal to or smaller than the data size K1. The frame coding unit 64 also judges whether the data size of the multimedia image data set F1 after decompression is equal to or smaller than the data size K2. If a result of the judgment is affirmative, the frame coding unit 64 inputs the compressed frame data sets Fr2 to the compilation unit 65. If the result is negative (that is, the data size is larger than the data size K1 or K2, or both K1 and K2), the frame coding unit 64 sends information representing this fact to the coding control unit 62. After reception of this information, the coding control unit 62 controls the frame sampling unit 63 to reduce the number of frames to be sampled, and controls the frame coding unit 64 to increase a compression ratio.

More specifically, the data size of the compressed frame data sets Fr2 becomes different, depending on whether the frames represent simple images of a single color or whether the frames represent images including detailed subjects, for example. The data size of the multimedia image data set F1 after decompression also varies, depending on the simplicity or complexity. Therefore, the data size of the multimedia image data set F1 may be larger than the data size K in some cases, depending on the complexity of the frames. Consequently, in the case where the data size of the multimedia image data set F1 generated by the compilation unit 65 is larger than the data size K, the sampling and the coding of the sampled frame data sets Fr1 are carried out again to cause the data size of the multimedia image data set F1 to become the data size K or smaller.

The compilation unit 65 generates the multimedia image data set F1 by compiling the compressed frame data sets Fr2 into a Flash™ movie. More specifically, the compilation unit 65 adds information necessary for serial display of the frames (such as information on a display interval between the frame data sets Fr2) to the respective compressed frame data sets Fr2, and arranges the compressed frame data sets Fr2. In this manner, the compressed frame data sets Fr2 are compiled into the multimedia image data set F1. In the case where sound is added to the multimedia image data set F1, the compilation unit 65 includes audio data to the multimedia image data set F1.

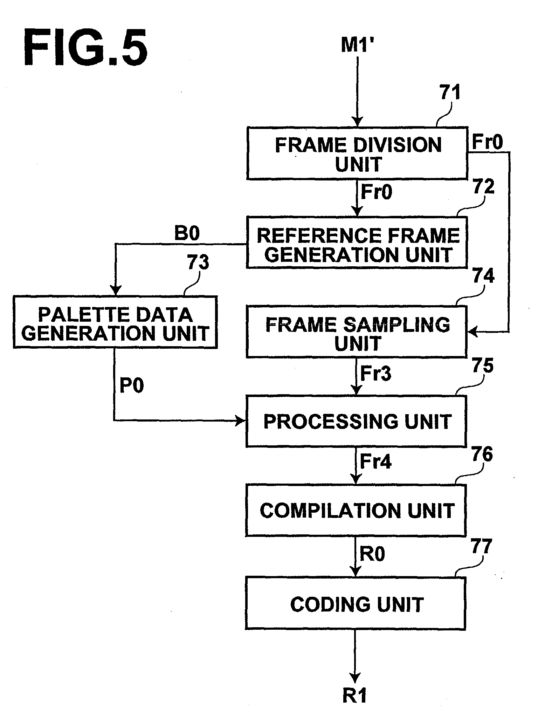

The reduced-color moving image generation unit 55 converts the format-converted moving image data set M1 into the reduced-color moving image data set R1 in the case where the terminal 3 can carry out neither moving image display nor multimedia image display. Figure 5 is a block diagram showing a configuration of the reduced-color moving image generation unit 55 in detail. As shown in Figure 5, the reduced-color moving image generation unit 55 comprises a frame division unit 71, a reference frame generation unit 72, a palette data generation unit 73, a frame sampling unit 74, a processing unit 75, a compilation unit 76, and a coding unit 77.

The frame division unit 71 divides the raw moving image data set M1' into the frame data sets Fr0, as the frame division unit 61 of the multimedia image generation unit 54.

The reference frame generation unit 72 generates a reference frame data set B0 used for palette data generation from the frame data sets Fr0. The reference frame data set B0 refers to a first frame data set Fr0 that comes first in the frames when the frames are arranged in chronological order. Alternatively, any one of the frame data sets Fr0 may be used as the reference frame data set B0. Furthermore, the reference frame data set B0 may be one image data set generated by combining all of the frame data sets Fr0 or from a portion Fr0' of the frame data set Fr0 (hereinafter referred to as selected frame data sets Fr0'). Alternatively, all the frame data sets Fr0 or the selected frame data sets Fr0' may be averaged and used as the reference frame data set B0. The selected frame data sets Fr0' may be frame data sets sampled by the frame sampling unit 74 as will be explained later.

The palette data generation unit 73 generates a palette data set P0 having a predetermined number of colors that are necessary for color reduction processing from the reference frame data set B0. More specifically, the palette data set P0 can be generated according to a median cut method, but a method of palette data generation is not limited to this method.

In the median cut method, RGB color data comprising the reference frame data set B0 are plotted in a three-dimensional RGB space, and a median is found in a range where the color data exist in the space. The median is then used as one palette color comprising the palette data set B0, and the space is divided into two spaces by the median. In the divided spaces, the median is also found. By repeating the above-described procedure until the number of colors in the palette data set becomes the predetermined number (such as 256 colors), the palette colors comprising the palette data set P0 can be found.

The frame sampling unit 74 samples frame data sets Fr3 comprising the reduced-color moving image data set from the frame data sets Fr0. More specifically, the frame sampling unit 74 obtains information on the number of frames in the reduced-color moving image represented by the reduced-color moving image data set R1 that is displayed by the terminal 3 requesting the transfer, with reference to the table T1 shown in Figure 2. The frame sampling unit 74 then samples the frame data sets Fr3 corresponding to the number. At this time, the frame data sets are sampled at intervals that are obtained by dividing playtime of the moving image data set M0 by the number of frames. New frame data sets may also be generated by interpolation between the frames, in addition to the sampling.

The processing unit 75 carries out the color reduction processing on the frame data sets Fr3 sampled by the frame sampling unit 74, by using the palette data set P0. As a method of the color reduction processing, an error diffusion technique or the like can be used. In this manner, reduced-color frame data sets Fr4 are generated.

The compilation unit 76 arranges the reduced-color frame data sets Fr4 generated by the processing unit 75 in chronological order, and generates one file. In this manner, the reduced-color moving image data set R0 wherein the frames are serially changed is generated.

The coding unit 77 carries out coding on the reduced-color moving image data set R0, and generates the reduced-color moving image data set R1. At this time, the coding is carried out to cause a data size of the reduced-color moving image data set R1 to become the data size K or smaller. As a file format for the reduced-color moving image data set R1, Animated GIF or MNG that is a format of PNG corresponding to Animated GIF may be used, which is not necessarily limited thereto.

The image output unit 56 outputs the multimedia image data set F1 generated by the multimedia image generation unit 54 or the reduced-color moving image data set R1 generated by the reduced-color moving image generation unit 55 to the image transmission unit 16.

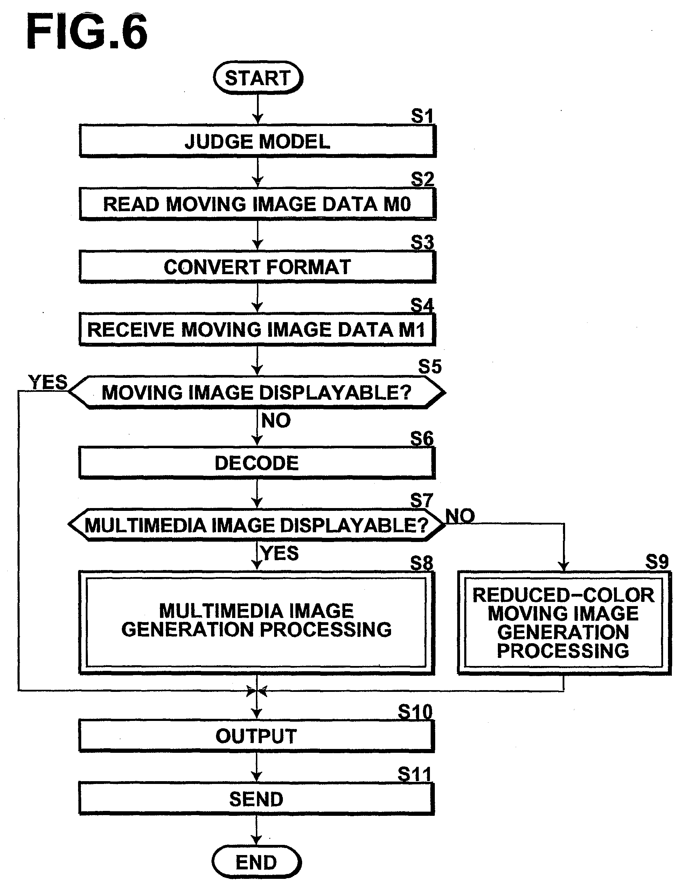

A procedure carried out in the first embodiment will be explained next. Figure 6 is a flow chart showing the procedure. When the request sent from the terminal 3 is received by the request reception unit 12, the procedure starts. The model judgment unit 13 judges the model of the terminal 3, based on the model information included in the request (Step S1). The moving image format conversion unit 14 then reads the moving image data set M0 having the file name included in the request from the moving image storage unit 11 (Step S2), and converts the format of the moving image data set M0 according to the model of the terminal 3, with reference to the table T1. In this manner, the format-converted moving image data set M1 is obtained (Step S3).

The moving image conversion unit 15 receives the format-converted moving image data set M1 (Step S4), and judges whether the model of the terminal 3 can carry out moving image display (Step S5). If a result at Step S5 is negative, the decoding unit 52 decodes the format-converted moving image data set M1 and obtains the raw moving image data set M1' (Step S6). The output format determination unit 53 then judges whether or not the terminal 3 can carry out multimedia image display, based on the table T1 (Step S7). If a result at Step S7 is affirmative, the multimedia image generation unit 54 carries out multimedia image generation processing on the raw moving image data set M1' (Step S8).

If the result at Step S5 is affirmative, the procedure goes to Step S10, and the image output unit 56 outputs the format-converted moving image data set M1 to the image transmission unit 16. The image transmission unit 16 then sends the format-converted moving image data set M1 to the terminal 3 (Step S11) to end the procedure.

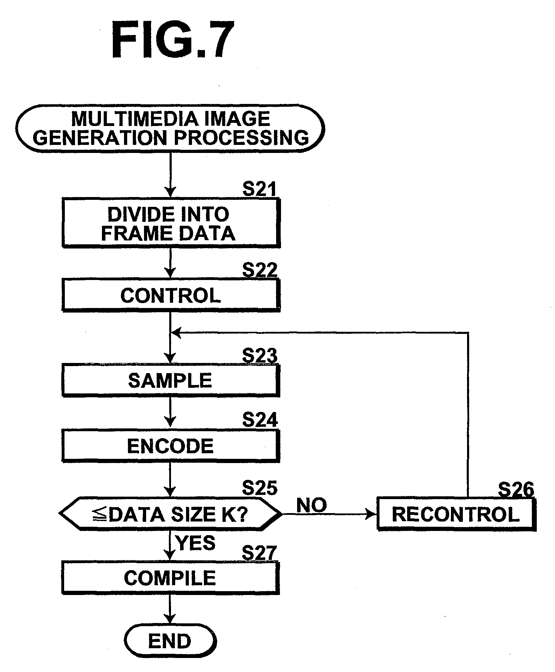

Figure 7 is a flow chart showing a procedure in the multimedia image generation processing. The frame division unit 61 divides the raw moving image data set M1' into the frame data sets Fr0 (Step S21), and the coding control unit 62 controls the frame sampling unit 63 and the frame coding unit 64 for causing the data size of the multimedia image data set F1 to become the data size K or smaller (Step S22).

The frame sampling unit 63 samples the frame data sets Fr1 comprising the multimedia image data set F1 from the frame data sets Fr0 (Step S23). The frame coding unit 64 then carries out the coding on the sampled frame data sets Fr1, and generates the compressed frame data sets Fr2 (Step s24). The frame coding unit 64 also judges whether the data size of the multimedia image data set F1 to be generated from the compressed frame data sets Fr2 by the compilation unit 65 is equal to or smaller than the data size K (Step S25). If a result at Step S25 is negative, the frame coding unit 64 inputs the information to the coding control unit 62. The coding control unit 62 controls the frame sampling unit 63 and the frame coding unit 64 to cause the data size of the multimedia image data set F1 to become equal to or smaller than the data size K (Step S26), and the procedure returns to Step S23. The frame sampling unit 63 and the frame coding unit 64 repeat the procedure from Step S23 until the data size of the multimedia image data set F1 becomes equal to or smaller then the data size K.

If the result at Step S25 is affirmative, the compilation unit 65 compiles the compressed frame data sets Fr2 into the Flash™ movie, and generates the multimedia image data set F1 (Step S27) to end the multimedia image generation processing.

The image output unit 56 then outputs the multimedia image data set F1 generated through the multimedia image generation processing to the image transmission unit 16 (Step S10 in Figure 6). The image transmission unit 16 sends the multimedia image data set F1 to the terminal 3 (Step S11) to end the procedure.

Meanwhile, if the result at Step S7 is negative, the reduced-color moving image generation unit 55 carries out reduced-color moving image generation processing on the raw moving image data set M1' (Step S9).

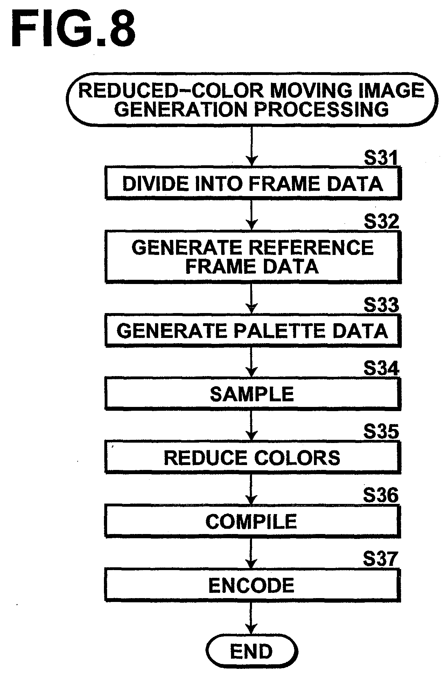

Figure 8 is a flow chart showing a procedure in the reduced-color moving image generation processing. The frame division unit 71 divides the raw moving image data set M1' into the frame data sets Fr0 (Step S31), and the reference frame generation unit 72 generates the reference frame data set B0 from the frame data sets Fr0 (Step S32). The palette data generation unit 73 then generates the palette data set P0 from the reference frame data set B0 (Step S33).

The frame sampling unit 74 samples the frame data sets Fr3 comprising the reduced-color moving image from the frame data sets Fr0 (Step S34). The procedure at Step S34 may be carried out before the procedure at Steps S32 and S33. Alternatively, the procedure from Step S32 to Step S34 may be carried out in parallel.

The processing unit 75 generates the reduced-color frame data set Fr4 by carrying out the color reduction processing on the sampled frame data sets Fr3 by using the palette data set P0 (Step S35). The compilation unit 76 then arranges the reduced-color frame data sets Fr4 generated by the processing unit 75 in chronological order, and generates the reduced-color moving image data set R0 (Step S36). The coding unit 77 carries out the coding on the reduced-color moving image data set R0, and generates the reduced-color moving image data set R1 (Step S37) to end the reduced-color moving image generation processing.

The image output unit 56 then outputs the reduced-color moving image data set R1 generated through the reduced-color moving image generation processing to the image transmission unit 16 (Step S10 in Figure 6). The image transmission unit 16 then sends the reduced-color moving image data set R1 to the terminal 3 (Step s11) to end the procedure.

The terminal 3 receives the multimedia image data set F1, or the reduced-color moving image data set R1, or the format-converted moving image data set M1. In the case where the terminal 3 can carry out moving image display, the format-converted moving image data set M1 is sent thereto. Therefore, the moving image is displayed thereon. If the terminal 3 can carry out multimedia image display but cannot carry out moving image display, the multimedia image data set F1 is sent thereto. The image having motion caused by serially changing the frames sampled from the format-converted moving image data set M1 is displayed on the terminal 3 in high quality.

In the case where the terminal 3 can carry out neither moving image display nor multimedia image display, the reduced-color moving image data set R1 is sent thereto. The image having motion caused by serially changing the frames sampled from the format-converted moving image data set M1 is displayed on the terminal 3, based on the reduced-color moving image data set R1.

As has been described above, according to the first embodiment, the model of the terminal 3 requesting moving image data transfer is judged first. If the model cannot carry out moving image display but can carry out multimedia image display, the moving image data set M0 is converted into the multimedia image data set F1 and sent to the terminal. The multimedia image data set F1 includes the frame data sets Fr2 compressed according to the compression method considering two-dimensional redundancy such as JPEG, unlike the reduced-color moving image data set R1. Therefore, the image displayed frame by frame can be generated in high quality while the data size thereof is reduced compared to the case of the reduced-color moving image data set R1. Consequently, if the terminal 3 is not capable of moving image display and has a limit in the data size that can be dealt with, the multimedia image data set F1 allows pseudo moving image display in high quality. In this manner, the image displayed frame by frame can be reproduced in high quality on the terminal 3 if the terminal 3 has a high-resolution display screen.

Furthermore, since the multimedia image data set F1 is generated from the format-converted moving image data set M1 according to a characteristic of the terminal 3, the multimedia image data set F1 can se displayed on the terminal 3 with certainty.

In the case where the data size of the multimedia image data set F1 is larger than the data size K, the sampling of the frame data sets Fr1 and the coding of the frame data sets Fr2 are carried out repeatedly until the data size becomes equal to or smaller than the data size K. Therefore, the multimedia image data set F1 has the data size that is in accordance with the data size K corresponding to the terminal 3.

In the case where the terminal 3 cannot display not only the moving image but also the multimedia image, the moving image data set M0 is converted into the reduced-color moving image data set R1 and sent to the terminal 3. Therefore, although the terminal 3 can carry out neither multimedia image display nor moving image display, pseudo moving image display can be realized by using the reduced-color moving image data set R1 although an image quality thereof is lower.

When the reduced-color moving image data set R1 is generated from the format-converted moving image data set M1, only the palette data set P0 is generated. Therefore, unlike the method described in Japanese Unexamined Patent Publication No. 11 (1999)-259640, generation of palette data sets for every several frames becomes unnecessary. As a result, the reduced-color moving image data set R1 can be obtained from the moving image data set M0 without increasing a size of the apparatus.

Although the multimedia image data set F1 is generated as the Flash™ movie in the first embodiment, any format that enables interactive frame-by-frame display can be used.

In the first embodiment, sound included in the moving image data set M0 can be included in the multimedia image data set F1.

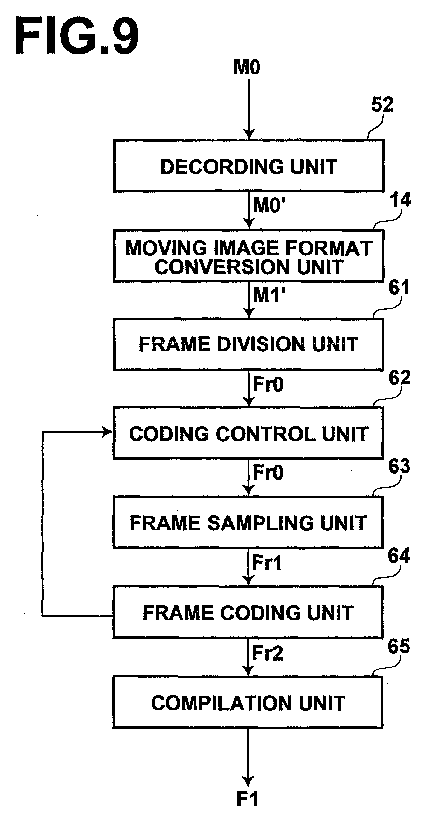

The multimedia image generation unit 54 in the first embodiment may be used alone as a moving image conversion apparatus for converting a moving image into a multimedia image. In this case, as shown in Figure 9, the apparatus comprises the decoding unit 52 and the moving image format conversion unit 14 for decoding the moving image data set M0 to generate a decoded moving image data set M0' and for converting the decoded moving image data set M0' into a format that is appropriate for a display device whereon the multimedia image is displayed.

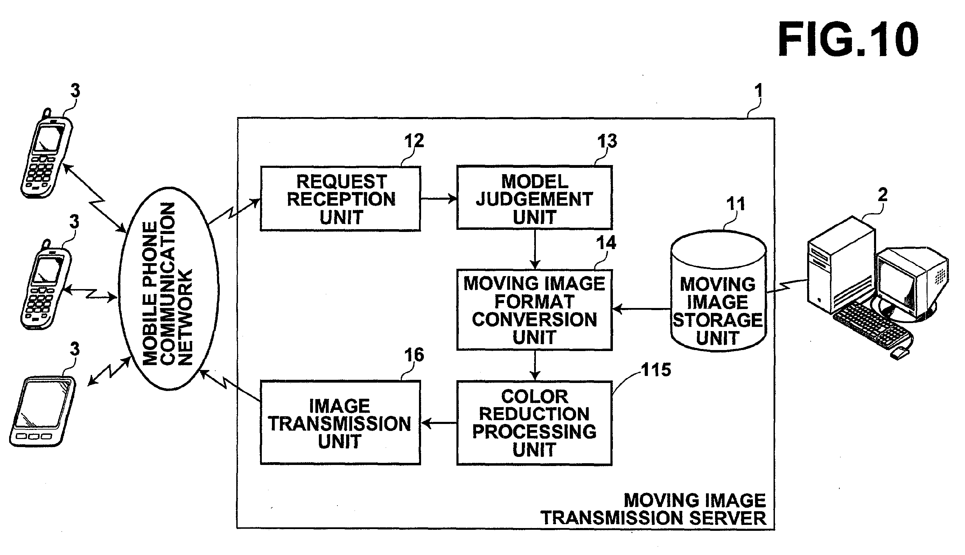

A second embodiment of the present invention will be explained next. Figure 10 is a block diagram showing a configuration of a moving image transmission system using a moving image transmission server adopting a moving image conversion apparatus and a moving image transmission apparatus of the second embodiment of the present invention. In the second embodiment, the same elements as in the first embodiment have the same reference numbers, and detailed explanations thereof will be omitted.

As shown in Figure 10, the moving image transmission system in the second embodiment comprises a color reduction processing unit 115 instead of the moving image conversion unit 15 in the moving image transmission server 1 in the first embodiment.

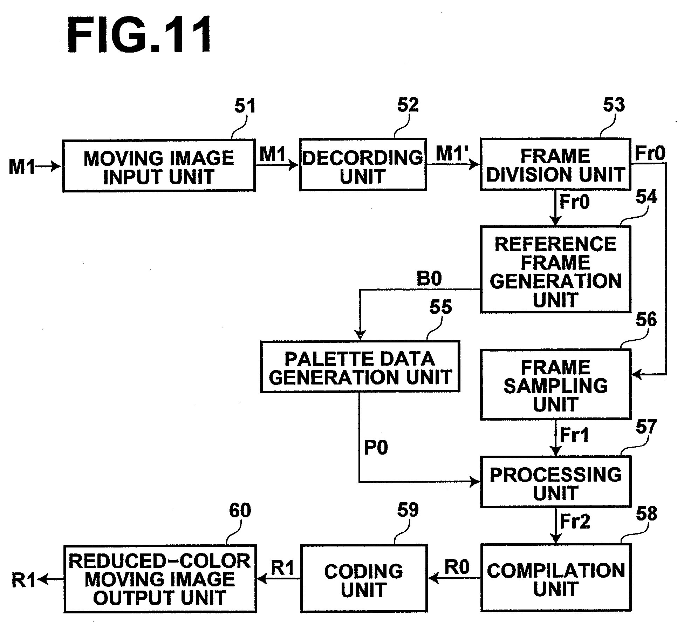

The color reduction processing unit 115 converts a format-converted moving image data set M1 into a reduced color moving image data set R1 in the case where a terminal 3 cannot carry out moving image display. Figure 11 is a block diagram showing a configuration of the color reduction processing unit 115. As shown in Figure 11, the color reduction processing unit 115 comprises a moving image input unit 151, a decoding unit 152, a frame division unit 153, a reference frame generation unit 154, a palette data generation unit 155, a frame sampling unit 156, a processing unit 157, a compilation unit 158, a coding unit 159, and a reduced-color moving image output unit 160.

The moving image input unit 151, the decoding unit 152, the frame division unit 153, the reference frame generation unit 154, the palette data generation unit 155, the frame sampling unit 156, the processing unit 157, the compilation unit 158, the coding unit 159, and the reduced-color moving image output unit 160 in the second embodiment operate in the same manner as the moving image input unit 51, the decoding unit 52, the frame division unit 71, the reference frame generation unit 72, the palette data generation unit 73, the frame sampling unit 74, the processing unit 75, the compilation unit 76, the coding unit 77, and the image output unit 56 in the first embodiment, and detailed explanations thereof will be omitted.

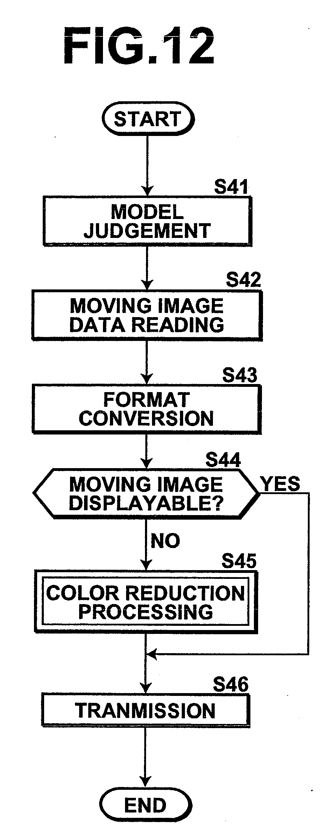

A procedure carried out in the second embodiment will be explained next. Figure 12 is a flow chart showing the procedure. When a request sent from the terminal 3 is received by a request reception unit 12, the procedure starts. A model judgment unit 13 judges the model of the terminal 3 based on model information included in the request (Step S41). Amoving image format conversion unit 14 then reads a moving image data set M0 having the file name included in the request from a moving image storage unit 11 (Step S42), and converts the format of the moving image data set M0 according to the model of the terminal 3, with reference to the table T1. In this manner, the format-converted moving image data set M1 is obtained (Step S43).

The color reduction processing unit 115 judges whether the model of the terminal 3 is capable of carrying out moving image display (Step S44). If a result at Step S44 is negative, the format-converted moving image data set M1 is subjected to color reduction processing (Step S45).

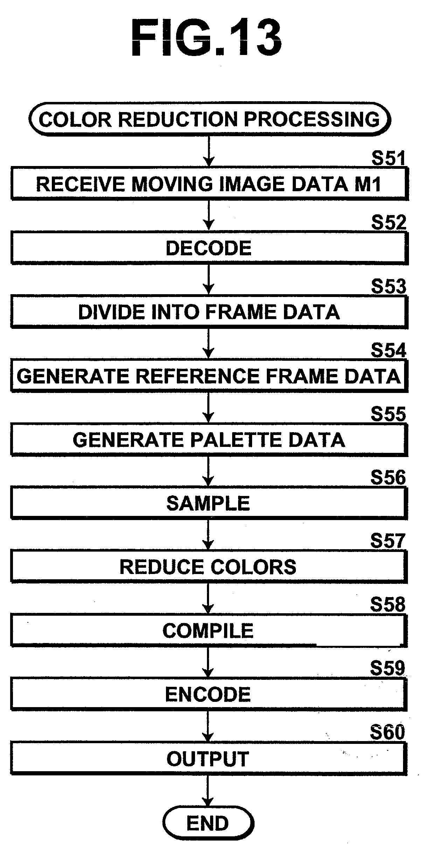

Figure 13 is a flow chart showing a procedure in the color reduction processing. The moving image input unit 151 receives the format-converted moving image data set M1 (Step S51), and the decoding unit 152 decodes the format-converted moving image data set M1 to generate a raw moving image data set M1' (Step S52). The frame division unit 153 divides the raw moving image data set M1' into frame data sets Fr0 (Step S53), and the reference frame generation unit 154 generates a reference frame data set B0 from the frame data sets Fr0 (Step S54). The palette data generation unit 155 then generates a palette data set P0 from the reference frame data set B0 (Step S55).

The frame sampling unit 156 samples frame data sets Fr3 used for generating the reduced-color moving image data set from the frame data sets Fr0 (Step S56). The procedure at Step S56 may be carried out before the procedure at Steps S54 and S55. Alternatively, the procedure from Steps S54 to Step S56 may be carried out in parallel.

The processing unit 157 generates reduced-color frame data sets Fr4 by reducing colors in the frame data sets Fr3 by using the palette data set P0 (Step S57). The compilation unit 158 then arranges the reduced-color frame data sets Fr4 generated by the processing unit 157 in chronological order, and generates a raw reduced-color moving image data set R0 (Step S58). The coding unit 159 encodes the raw reduced-color moving image data set R0, and generates the reduced-color moving image data set R1 (Step S59). The reduced-color moving image output unit 160 then outputs the reduced-color moving image data set R1 (Step S60) to end the color reduction processing.

In the case where the result at Step S44 in Figure 12 is affirmative and in the case where the color reduction at Step S45 is completed, the image transmission unit 16 sends the reduced-color moving image data set R1 or the format-converted moving image data set M1 to the terminal 3 (Step S46) to end the procedure.

The terminal 3 receives the reduced-color moving image data set R1 or the format-converted moving image data set M1. In the case where the terminal 3 can carry out moving image display, the format-converted moving image data set M1 is sent thereto. Therefore, the moving image represented by the format-converted moving image data set M1 can be displayed thereon. In the case where the terminal 3 does not display the moving image, the reduced-color moving image data set R1 is sent thereto. An image having motion caused by serially changing the frames sampled from the format-converted moving image data set M1 can be displayed on the terminal 3, based on the reduced-color moving image data set R1.

As has been described above, according to the second embodiment, the model of the terminal 3 requesting the moving image transfer is judged first. If the model does not allow moving image display, the requested moving image data set M0 is converted into the reduced-color moving image data set R1 and sent to the terminal 3. Therefore, although the terminal 3 cannot display the moving image, pseudo moving image display can be carried out based on the reduced-color moving image data set R1.

In the case where the reduced-color moving image data set R1 is sent to the terminal 3, a file size of image data that can be displayed on the terminal 3 is limited. Therefore, without considering the file size limit, the reduced-color moving image data set R1 may not be displayed on the terminal 3.

For this reason, the reduced-color moving image data set R1 is generated so as to have the file size corresponding to the model of the terminal 3, and the reduced-color moving image data set R1 can be displayed without fail once the reduced-color moving image data set R1 is sent thereto.

The color reduction processing 115 in the second embodiment may be used solely as an apparatus for converting a moving image into a reduced-color moving image. In this case, the moving image data set M0 can be converted into the reduced-color moving image data set R1 regardless of the model of the terminal 3.

In the first and second embodiments described above, only the palette data set P0 is generated and used for generating the reduced-color moving image data set R1 from the moving image data set M0. However, as has been described in Japanese Unexamined Patent Publication No. 11(1999)-259640, palette data sets may be generated for every several frames and used in generation of the reduced-color moving image data set R1 from the format-converted moving image data set M1. In addition, any method may be used as long as the reduced-color moving image data set R1 can be generated from the format-converted moving image data set M1.

## Claims

1. A moving image conversion apparatus comprising:
sampling means for sampling frames from a moving image; and
multimedia image generation means for generating a multimedia image in a multimedia format by compressing the frames according to a compression method considering two-dimensional redundancy.

2. The moving image conversion apparatus according to Claim 1, wherein the multimedia image generation means generates the multimedia image in such a manner that the multimedia image can be displayed on a display device in accordance with a characteristic of the display device.

3. The moving image conversion apparatus according to Claim 2, wherein the multimedia image generation means comprises:
size change means for enlarging or reducing the frames according to the characteristic of the display device;
frame compression means for compressing the frames by the compression method considering two-dimensional redundancy so that a data size of the multimedia image can be dealt with by the display device; and
format compilation means for generating the multimedia image by compiling the frames compressed by the frame compression means into the format.

4. The moving image conversion apparatus according to Claim 3, wherein
the frame compression means repeats changing of a compression ratio of the frames and/or thinning of the frames until the data size of the multimedia image becomes the data size that can be dealt with by the display device in the case where the multimedia image does not have the data size that can be dealt with by the display device.

5. The moving image conversion apparatus according to any one of Claims 2 to 4, wherein the display device is a mobile terminal.

6. A moving image transmission apparatus for sending a moving image to a terminal requesting transfer of the moving image, the moving image transmission apparatus comprising:
model judgment means for judging a model of the terminal; and
moving image conversion means for converting the moving image into a multimedia image in a multimedia format in the case where the model of the terminal is not capable of moving image display but enables multimedia image display, whereby
the moving image transmission apparatus sends the multimedia image instead of the moving image to the terminal.

7. The moving image transmission apparatus according to Claim 6, further comprising:
reduced-color moving image conversion means for converting the moving image into a reduced-color moving image in the case where the model of the terminal can carry out neither moving image display nor multimedia image display but enables reduced-color moving image display, whereby
the moving image transmission apparatus sends the reduced-color moving image instead of the moving image to the terminal.

8. The moving image transmission apparatus according to Claim 6 or 7, wherein the moving image conversion means comprises the moving image conversion apparatus according to any one of Claims 1 to 5.

9. A moving image conversion method comprising the steps of:
sampling frames from a moving image; and
generating a multimedia image in a multimedia format by compressing the frames according to a compression method considering two-dimensional redundancy.

10. A moving image transmission method for sending a moving image to a terminal requesting transfer of the moving image, the moving image transmission method comprising the steps of:
judging a model of the terminal;
converting the moving image into a multimedia image in a multimedia format in the case where the model of the terminal is not capable of moving image display but enables multimedia image display; and
sending the multimedia image instead of the moving image to the terminal.

11. A program causing a computer to execute a moving image conversion method, the program comprising the steps of:
sampling frames from a moving image; and
generating a multimedia image in a multimedia format by compressing the frames according to a compression method considering two-dimensional redundancy.

12. A program causing a computer to execute a moving image transmission method for sending a moving image to a terminal requesting transfer of the moving image, the program comprising the steps of:
judging a model of the terminal;
converting the moving image into a multimedia image in a multimedia format in the case where the model of the terminal is not capable of moving image display but enables multimedia image display; and
sending the multimedia image instead of the moving image to the terminal.

13. A moving image conversion apparatus for converting a moving image comprising frames into a reduced-color moving image having a predetermined number of colors, the moving image conversion apparatus comprising:
reference frame generation means for generating a reference frame representing the frames;
palette data generation means for generating a palette data set including the predetermined number of colors from the reference frame;
frame sampling means for sampling, from the frames, reduced-color moving image generation frames to be used for generating the reduced-color moving image;
color reduction processing means for converting the reduced-color moving image generation frames into reduced-color moving image frames by using the palette data set; and
frame compilation means for compiling the reduced-color moving image from the reduced-color moving image frames.

14. The moving image conversion apparatus according to Claim 13, wherein the reference frame generation means generates the reference frame from all or a part of the frames comprising the moving image.

15. A moving image transmission apparatus for sending a moving image to a terminal requesting transfer of the moving image, the moving image transmission apparatus comprising:
model judgment means for judging a model of the terminal; and
reduced-color moving image conversion means for converting the moving image into a reduced-color moving image in the case where the model is incapable of moving image display but capable of reduced-color moving image display, whereby
the moving image transmission apparatus sends the reduced-color moving image instead of the moving image to the terminal.

16. The moving image transmission apparatus according to Claim 15, wherein the reduced-color moving image conversion means comprises:
reference frame generation means for generating a reference frame representing frames comprising the moving image;
palette data generation means for generating a palette data set including a predetermined number of colors from the reference frame;
frame sampling means for sampling, from the frames, reduced-color moving image generation frames to be used for generating the reduced-color moving image;
color reduction processing means for converting the reduced-color moving image generation frames into reduced-color moving image frames according to the palette data set; and
frame compilation means for compiling the reduced-color moving image from the reduced-color moving image frames.

17. A moving image conversion method for converting a moving image comprising frames into a reduced-color moving image having a predetermined number of colors, the moving image conversion method comprising the steps of:
generating a reference frame representing the frames;
generating a palette data set including the predetermined number of colors from the reference frame;
sampling, from the frames, reduced-color moving image generation frames to be used for generating the reduced-color moving image;
converting the reduced-color moving image generation frames into reduced-color moving image frames according to the palette data set; and
compiling the reduced-color moving image from the reduced-color moving image frames.

18. A program causing a computer to execute a moving image conversion method for converting a moving image comprising frames into a reduced-color moving image having a predetermined number of colors, the program comprising the steps of:
generating a reference frame representing the frames;
generating a palette data set including the predetermined number of colors from the reference frame;
sampling, from the frames, reduced-color moving image generation frames to be used for generating the reduced-color moving image;
converting the reduced-color moving image generation frames into reduced-color moving image frames according to the palette data set; and
compiling the reduced-color moving image from the reduced-color moving image frames.

19. A moving image transmission method for sending a moving image to a terminal requesting transfer of the moving image, the moving image transmission method comprising the steps of:
judging a model of the terminal;
converting the moving image into a reduced-color moving image in the case where the model is not capable of moving image display but is capable of reduced-color moving image display; and
sending the reduced-color moving image instead of the moving image to the terminal.

20. A program causing a computer to execute a moving image transmission method for sending a moving image to a terminal requesting transfer of the moving image, the program comprising the steps of:
judging a model of the terminal;
converting the moving image into a reduced-color moving image in the case where the model is not capable of moving image display but is capable of reduced-color moving image display; and
sending the reduced-color moving image instead of the moving image to the terminal.
